# EUROPÄISCHE PATENTSCHRIFT

(11) **EP 1 045 176 B1**
(45) Veröffentlichungstag und Bekanntmachung des Hinweises auf die Patenterteilung: **12.11.2003**
(21) Anmeldenummer: 00106782.6
(22) Anmeldetag: 30.03.2000
(51) Int. Cl.: F16J 15/10, F16J 15/32

(54) **Stützkörper für einen Wellendichtring**
Supporting member for lip seal
Elément support pour joint à lèvre

(30) Priorität: 13.04.1999 DE 19916624
(43) Veröffentlichungstag der Anmeldung: 18.10.2000
(73) Patentinhaber: Carl Freudenberg KG, 69469 Weinheim (DE)
(72) Erfinder: Gonfrier, Christian, 52360 Lecey (FR)

(56) Entgegenhaltungen:
- EP-A- 0 188 140
- EP-A- 0 272 775

## Beschreibung

### Technisches Gebiet

Die Erfindung betrifft einen Stützkörper für einen Wellendichtring, wobei der Stützkörper - im Längsschnitt betrachtet - im wesentlichen T-förmig ausgebildet ist und aus einem sich in axialer Richtung erstreckenden Stützabschnitt und einer stirnseitig am Stützabschnitt angeordneten Anschlagscheibe besteht, wobei der Stützabschnitt von zumindest einer Dichtlippe des Wellendichtrings unter radialer Vorspannung außenumfangsseitig umschließbar ist, wobei die Bodenseite oder die Stirnseite des Wellendichtrings an die Anschlagscheibe anlegbar ist, wobei die Anschlagscheibe einen Außendurchmesser aufweist, der zumindest so groß ist, wie der Außendurchmesser des Wellendichtrings und wobei die Anschlagscheibe zumindest eine Demontageausnehmung zum Abstreifen des Wellendichtrings vom Stützabschnitt aufweist.

### Stand der Technik

Ein solcher Stützkörper für einen Wellendichtring ist aus der EP-A-0 272 775 bekannt.

Ein weiterer Stützkörper ist aus der DE-OS 23 40 275 bekannt. Der Stützkörper ist als hülsenförmiger Montagering ausgebildet, wobei die Außenkontur des Montagerings die Innenumfangsseite des Wellendichtrings anliegend berührt.

### Darstellung der Erfindung

Der Erfindung liegt die Aufgabe zugrunde, einen Stützkörper für einen Wellendichtring zu zeigen, der sowohl den Innenumfang des Wellendichtrings als auch eine seiner Stirnseiten möglichst gut vor äußeren Einflüssen und/oder Beschädigungen schützt und außerdem ein einfaches Abstreifen des Wellendichtrings vom Stützabschnitt von Hand ermöglicht. Außerdem sollen Markierungen des Wellendichtrings, die auf der der Anschlagscheibe zugewandten Seite des Wellendichrings angebracht sind, problemlos ablesbar sein.

Diese Aufgabe wird erfindungsgemäß mit den Merkmalen von Anspruch 1 gelöst. Auf vorteilhafte Ausgestaltungen nehmen die Unteransprüche bezug.

Zur Lösung der Aufgabe ist ein Stützkörper für einen Wellendichtring vorgesehen, wobei der Stützkörper - im Längsschnitt betrachtet - im wesentlichen T-förmig ausgebildet ist und aus einem sich in axialer Richtung erstreckenden Stützabschnitt und einer stirnseitig am Stützabschnitt angeordneten Anschlagscheibe besteht, wobei der Stützabschnitt von zumindest einer Dichtlippe des Wellendichtrings unter radialer Vorspannung außenumfangsseitig umschließbar ist, wobei die Bodenseite oder die Stirnseiten des Wellendichtrings an die Anschlagscheibe anlegbar ist, wobei die Anschlagscheibe einen Außendurchmesser aufweist, der zumindest so groß ist wie der Außendurchmesser des Wellendichtrings, wobei die Anschlagscheibe zumindest eine Demontageausnehmung zum Abstreifen des Wellendichtrings vom Stützabschnitt aufweist und wobei die Demontageausnehmung - im Querschnitt der Anschlagscheibe betrachtet - durch eine im Wesentlichen nutförmige Vertiefung gebildet und radial nach außen offen ist. Bei einer derartigen Ausgestaltung des Stützkörpers ist von Vorteil, daß sowohl die Innenumfangsseite des Wellendichtrings als auch eine seiner Planflächen von Bodenseite oder Stirnseite zuverlässig vor äußeren Einflüssen geschützt sind. Ein solcher Stützkörper ist insbesondere dann von Vorteil, wenn der Wellendichtring eine in Richtung des abzudichtenden Raums vorgewölbte PTFE-Dichtlippe aufweist. Derartige Dichtlippen reagieren sehr empfindlich auf äußere mechanische Einflüsse und sollten daher während der Lagerung und/oder des Transports besonders geschützt werden. Bevorzugt ist die Bodenseite des Wellendichtrings an die Anschlagscheibe anlegbar.

Die Demontageausnehmung und ihre Anordnung in der Anschlagscheibe ist von entscheidender Wichtigkeit, da die Kraft zum Abstreifen des Wellendichtrings vom Stützabschnitt dadurch an der vergleichsweise unempfindlichen Bodenseite des Wellendichtrings angreifen kann. Zum Abstreifen wirken nur Kräfte in axialer Richtung auf die Bodenseite des Wellendichtrings, so daß eine unerwünschte Verformung und/oder Beschädigung der Dichtlippe, zum Beispiel durch radial auf den Wellendichtring wirkende Kräfte, ausgeschlossen ist.

Außerdem besteht durch die Demontageausnehmung die Möglichkeit, Markierungen auf der Bodenseite des Wellendichtrings, die der Anschlagscheibe zugewandt ist, beispielsweise die Artikelnummer des Wellendichtrings, zu lesen.

Die Demontageausnehmung ist - im Querschnitt der Anschlagscheibe betrachtet - durch eine im wesentlichen nutförmige Vertiefung gebildet und radial nach außen offen. Eine derartige Montageausnehmung ist besonders einfach und kostengünstig herstellbar. Besteht die Anschlagscheibe beispielsweise aus einem polymeren Werkstoff, kann die nutförmige Vertiefung während der Herstellung der Anschlagscheibe in einem Formgebungswerkzeug urgeformt werden.

Besteht die Anschlagscheibe demgegenüber aus einem metallischen Werkstoff, kann die nutförmige Vertiefung durch Umformen oder spanabhebende Fertigungsverfahren hergestellt werden.

Die Anschlagscheibe weist vorteilhafterweise zwei gleichmäßig in Umfangsrichtung verteilte Vertiefungen auf. Hierbei ist von Vorteil, daß durch die gleichmäßig in Umfangsrichtung verteilte Anordnung die Kraft zum Abstreifen des Wellendichtrings vom Stützabschnitt symmetrisch am Wellendichtring angreift und daher ein Verkanten des Wellendichtrings bezogen auf den Stützkörper und eine damit einhergehende unerwünschte Verformung der Dichtlippe ausgeschlossen ist.

Im Hinblick auf eine einfache und kostengünstige Fertigung können die Vertiefungen übereinstimmend ausgebildet sein. Außerdem ist bei einer derartigen Ausgestaltung von Vorteil, daß Montagefehler bezüglich der Winkelzuordnung von Stützkörper zu Wellendichtring reduziert sind.

Die Vertiefungen können in Umfangsrichtung der Anschlagscheibe bogenförmig ausgebildet sein. Dabei kann es zweckmäßig vorgesehen sein, daß die Vertiefungen die Form und Größe einer stirnseitig auf der der Anschlagscheibe zugewandten Seite des Wellendichtrings angebrachten Markierung aufweisen. Die Markierung kann beispielsweise durch die Artikelnummer und/oder die Größe des gestützten Wellendichtrings gebildet sein. Durch die zuvor beschriebene Ausgestaltung des Stützkörpers kann der auf dem Stützkörper gelagerte Wellendichtring problemlos identifiziert werden.

Bevorzugt weist der Stützabschnitt eine axiale Länge auf, die der Länge des Wellendichtrings in gleicher Richtung entspricht. Der Schutz des Wellendichtrings vor äußeren Einflüssen und/oder Beschädigungen ist dadurch weiter vergrößert.

Der Stützabschnitt und die Anschlagscheibe sind bevorzugt einstückig ineinander übergehend und materialeinheitlich ausgebildet. Bevorzugt bestehen der Stützabschnitt und die Anschlagscheibe aus einem polymeren Werkstoff, beispielsweise Polyetylen. Bei einem derartigen Werkstoff ist von Vorteil, daß die Herstellung kostengünstig ist, die PTFE-Dichtlippe gut auf dem Stützabschnitt gleiten kann und der Stützkörper nach Gebrauch recycelt werden kann.

Davon abweichend besteht jedoch auch die Möglichkeit, daß der Stützabschnitt und die Anschlagscheibe aus einem tiefziehbaren metallischen Werkstoff bestehen.

Der zuvor beschriebene Stützkörper findet bevorzugt Verwendung als Lagerund/oder Transportschutzring für Wellendichtringe.

### Kurzbeschreibung der Zeichnung

Der erfindungsgemäße Stützkörper wird nachfolgend anhand der schematisch dargestellten Figuren 1 bis 3 näher erläutert. Diese zeigen:
- Figur 1: eine Ansicht des Stützkörpers mit montiertem Wellendichtring aus Figur 2 von links,
- Figur 2: einen Längsschnitt entlang der Linie A-A aus Figur 1,
- Figur 3: einen Längsschnitt entlang der Linie B-B aus Figur 1.

### Ausführung der Erfindung

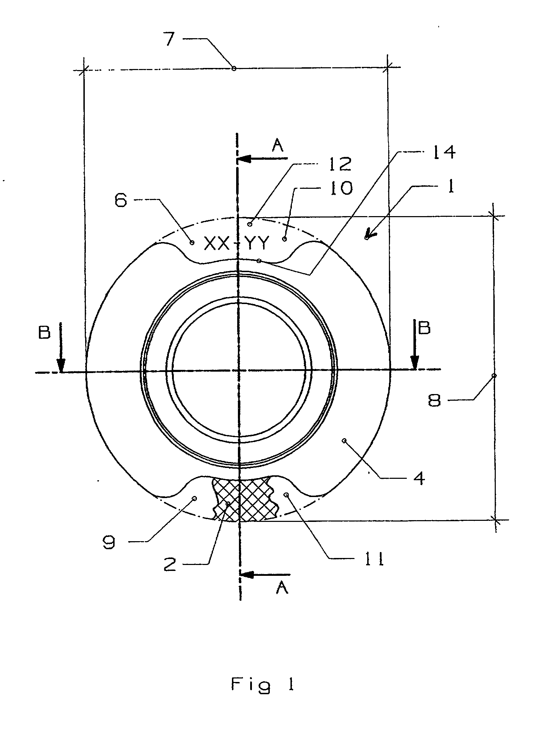

In Figur 1 ist eine Ansicht eines erfindungsgemäßen Stützkörpers 1 mit einem montierten Wellendichtring 2 gezeigt. Der Stützkörper 1 ist hülsenförmig ausgebildet und weist eine kreisringförmige Anschlagscheibe 4 auf, die radial innenseitig einstückig ineinander übergehend mit dem zylinderförmigen Stützabschnitt 3 ausgebildet ist. Die Anschlagscheibe 4 weist einen Außendurchmesser 7 auf, der in diesem Ausführungsbeispiel so groß ist, wie der Außendurchmesser 8 des Wellendichtrings 2.

Um den Wellendichtring 2 vom Stützabschnitt 3 abstreifen zu können, weist die Anschlagscheibe 4 in diesem Ausführungsbeispiel zwei Demontageausnehmungen 9 auf, die gleichmäßig in Umfangsrichtung verteilt, einander gegenüberliegend angeordnet sind. Die Demontageausnehmungen 9 sind als nutförmige Vertiefungen 10, 11 ausgebildet, die radial nach außen offen sind. Durch diese Vertiefungen 10, 11 streift eine axial wirkende Kraft F den Wellendichtring 2 vom Stützabschnitt 3 ab. Einer separaten Vorrichtung zum Abstreifen des Wellendichtrings 2 vom Stützabschnitt 3 bedarf es nicht. Als Kraft F ist die Handkraft eines Monteurs völlig ausreichend. Außerdem können bei gezielter Winkelzuordnung des Wellendichtrings 2 zu den Vertiefungen 10, 11 Markierungen 12 abgelesen werden, die beispielsweise die Artikelnummer und/oder die Größe des Wellendichtrings 2 angeben.

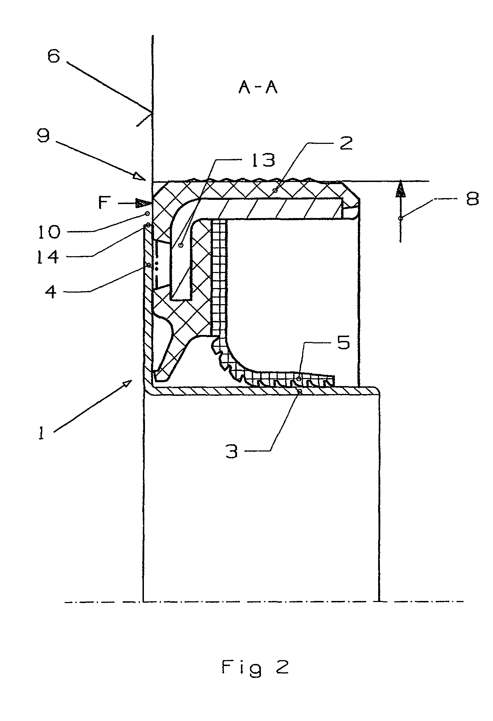

In Figur 2 ist der Schnitt A-A aus Figur 1 dargestellt. Der Wellendichtring 2 ist als Radialwellendichtring mit PTFE-Dichtlippe 5 ausgebildet, wobei die Dichtlippe 5 den Außenumfang des Stützabschnitts 3 unter radialer Vorspannung umschließt. Der Stützring 13 des Wellendichtrings 2 ist zumindest teilweise von elastomerem Werkstoff umschlossen, wobei der elastomere Werkstoff die der Dichtlippe 5 zugewandte Stirnseite der Anschlagscheibe 4 anliegend berührt.

Der Außendurchmesser 8 des Wellendichtrings 2 überragt den Nutgrund 14 der ersten Vertiefung 10 in radialer Richtung. Nach dem Abstreifen des Wellendichtrings 2 vom Stützkörper 1 wird der Wellendichtring 3 beispielsweise in ein Maschinenelement eingebaut und der Stützkörper 1 kann anschließend als Lager- und/oder Transportschutzring wiederverwendet werden.

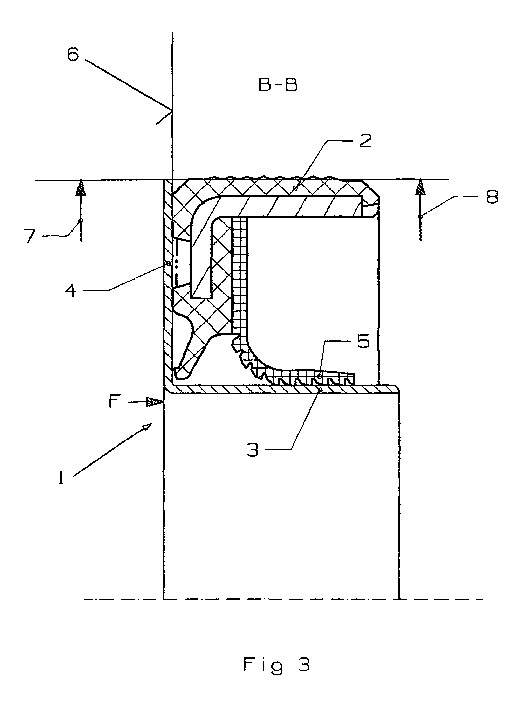

In Figur 3 ist der Schnitt B-B aus Figur 1 gezeigt. Diese Darstellung unterscheidet sich von der Darstellung aus Figur 2 dadurch, daß die Schnittebene um 90° versetzt ist. Die Außendurchmesser 7, 8 von Anschlagscheibe 4 und Wellendichtring 2 sind in diesem Ausführungsbeispiel gleich groß.

## Patentansprüche

1. Stützkörper (1) für einen Wellendichtring (2), wobei der Stützkörper (1) - im Längsschnitt betrachtet - im wesentlichen T-förmig ausgebildet ist und aus einem sich in axialer Richtung erstreckenden Stützabschnitt (3) und einer stirnseitig am Stützabschnitt (3) angeordneten Anschlagscheibe (4) besteht, wobei der Stützabschnitt (3) von zumindest einer Dichtlippe (5) des Wellendichtrings (2) unter radialer Vorspannung außenumfangsseitig umschließbar ist, wobei die Bodenseite (6) oder die Stirnseite des Wellendichtrings (2) an die Anschlagscheibe (4) anlegbar ist, wobei die Anschlagscheibe (4) einen Außendurchmesser (7) aufweist, der zumindest so groß ist, wie der Außendurchmesser (8) des Wellendichtrings (2) und wobei die Anschlagscheibe (4) zumindest eine Demontageausnehmung (9) zum Abstreifen des Wellendichtrings (2) vom Stützabschnitt (3) aufweist, **dadurch gekennzeichnet, daß** die Demontageausnehmung (9) - im Querschnitt der Anschlagscheibe (4) betrachtet - durch eine im wesentlichen nutförmige Vertiefung (10) gebildet und radial nach außen offen ist.

2. Stützkörper nach Anspruch 1, **dadurch gekennzeichnet, daß** die Anschlagscheibe (4) zwei gleichmäßig in Umfangsrichtung verteilte Vertiefungen (10, 11) aufweist.

3. Stützkörper nach einem der Ansprüche 1 oder 2, **dadurch gekennzeichnet, daß** die Vertiefungen (10, 11) übereinstimmend ausgebildet sind.

4. Stützkörper nach einem der Ansprüche 1 bis 3, **dadurch gekennzeichnet, daß** die Vertiefungen (10, 11) in Umfangsrichtung der Anschlagscheibe (4) bogenförmig ausgebildet sind.

5. Stützkörper nach einem der Ansprüche 1 bis 4, **dadurch gekennzeichnet, daß** die Form und Größe der Vertiefungen (10, 11) geeignet sind, stirnseitig auf der der Anschlagscheibe (4) zugewandten Seite des Wellendichtrings (2) angebrachte Markierungen (12) sichtbar werden zu lassen.

6. Stützkörper nach einem der Ansprüche 1 bis 5, **dadurch gekennzeichnet, daß** der Stützabschnitt (3) eine axiale Länge aufweist, die der Länge des Wellendichtrings (2) in gleicher Richtung entspricht.

7. Stützkörper nach einem der Ansprüche 1 bis 6, **dadurch gekennzeichnet, daß** der Stützabschnitt (3) und die Anschlagscheibe (4) einstückig ineinander übergehend und materialeinheitlich ausgebildet sind.

8. Stützkörper nach einem der Ansprüche 1 bis 7, **dadurch gekennzeichnet, daß** der Stützabschnitt (3) und die Anschlagscheibe (4) aus einem polymeren Werkstoff bestehen.

9. Stützkörper nach einem der Ansprüche 1 bis 7, **dadurch gekennzeichnet, daß** der Stützabschnitt (3) und die Anschlagscheibe (4) aus einem tiefziehbaren metallischen Werkstoff bestehen.

10. Verwendung eines Stützkörpers (1) nach einem der Ansprüche 1 bis 9 als Lager- und/oder Transportschutzring.

## Claims

1. A supporting body (1) for a shaft sealing ring (2), the supporting body (1) being of essentially T-shaped design, as seen in longitudinal section, and being composed of a supporting portion (3) extending in the axial direction and of a stop disc (4) arranged on the end face of the supporting portion (3), the supporting portion (3) being capable of being surrounded on the outer circumference, under radial prestress, by at least one sealing lip (5) of the shaft sealing ring (2), the bottom side (6) or end face of the shaft sealing ring (2) being capable of being brought to bear against the stop disc (4), the stop disc (4) having an outside diameter (7) which is at least as large as the outside diameter (8) of the shaft sealing ring (2), and the stop disc (4) having at least one demounting recess (9) for stripping off the shaft sealing ring (2) from the supporting portion (3), **characterized in that**, as seen in the cross section of the stop disc (4), the demounting recess (9) is formed by an essentially groove-shaped depression (10) and is open radially outwards.

2. A supporting body according to claim 1, **characterized in that** the stop disc (4) has two depressions (10, 11) distributed uniformly in the circumferential direction.

3. A supporting body according to any one of claims 1 or 2, **characterized in that** the depressions (10,11) are designed identically.

4. A supporting body according to any one of claims 1 to 3, **characterized in that** the depressions (10,11) are designed arcuately in the circumferential direction of the stop disc(4).

5. A supporting body according to any one of claims 1 to 4, **characterized in that** the shape and size of the depressions (10, 11) are suitable for causing markings (12) to become visible which are formed on the end face on that side of the shaft sealing ring (2) which faces the stop disc(4).

6. A supporting body according to any one of claims 1 to 5, **characterized in that** the supporting portion (3) has an axial length which corresponds to the length of the shaft sealing ring (2) in the same direction.

7. A supporting body according to any one of claims 1 to 6, **characterized in that** the supporting portion (3) and the stop disc (4) are produced so as to merge into one another in one piece and in a materially integral manner.

8. A supporting body according to any one of claims 1 to 7, **characterized in that** the supporting portion (3) and the stop disc (4) are composed of a polymeric material.

9. A supporting body according to any one of claims 1 to 7, **characterized in that** the supporting portion (3) and the stop disc (4) are composed of a deep-drawable metallic material.

10. The use of a supporting body (1) according to any one of claims 1 to 9, as a bearing ring and/or transport protection ring.

## Revendications

1. Elément support (1) pour joint à lèvre (2), l'élément support (1) étant exécuté de manière à avoir essentiellement une forme en T - considéré en coupe longitudinale - et étant formé d'un segment de support (3) s'étendant dans la direction axiale et d'un disque de butée (4) situé sur le côté frontal du segment de support (3), le segment de support (3) pouvant être entouré sur le côté de sa circonférence externe par au moins une lèvre d'étanchéité (5) du joint à lèvre (2) sous l'effet d'une précontrainte radiale, le côté de fond (6) ou le côté frontal du joint à lèvre (2) pouvant être mis en contact avec le disque de butée (4), le disque de butée (4) étant pourvu d'un diamètre extérieur (7) qui est au moins égal au diamètre extérieur (8) du joint à lèvre (2) et le disque de butée (4) étant pourvu d'au moins un évidement de démontage (9) servant à enlever le joint à lèvre (2) du segment de support (3), **caractérisé en ce que** l'évidement de démontage (9) est formé par un creux (10) ayant essentiellement la forme d'une gorge - si on considère la section transversale du disque de butée (4) - et étant ouvert vers l'extérieur dans le sens radial.

2. Elément support selon la revendication 1, **caractérisé en ce que** le disque de butée (4) est pourvu de deux creux (10, 11) répartis de manière uniforme dans la direction circonférentielle.

3. Elément support selon l'une des revendications 1 ou 2, **caractérisé en ce que** les creux (10, 11) sont exécutés de manière identique.

4. Elément support selon l'une des revendications 1 à 3, **caractérisé en ce que** les creux (10, 11) sont exécutés de manière courbe dans la direction circonférentielle du disque de butée (4).

5. Elément support selon l'une des revendications 1 à 4, **caractérisé en ce que** la forme et la taille des creux (10, 11) sont adaptées pour rendre visibles des marquages (12) appliqués sur le côté frontal du joint à lèvre (2) tourné vers le disque de butée (4).

6. Elément support selon l'une des revendications 1 à 5, **caractérisé en ce que** le segment de support (3) a une longueur axiale qui correspond à la longueur du joint à lèvre (2) dans la même direction.

7. Elément support selon l'une des revendications 1 à 6, **caractérisé en ce que** le segment de support (3) et le disque de butée (4) sont exécutés dans un même matériau et de manière à se confondre.

8. Elément support selon l'une des revendications 1 à 7, **caractérisé en ce que** le segment de support (3) et le disque de butée (4) sont formés d'un matériau polymère.

9. Elément support selon l'une des revendications 1 à 7, **caractérisé en ce que** le segment de support (3) et le disque de butée (4) sont formés d'un matériau métallique pouvant subir un emboutissage profond.

10. Utilisation d'un élément support (1) selon l'une des revendications 1 à 9 en tant que bague de protection de palier et/ou de transport.
